# EUROPEAN PATENT APPLICATION

(11) **EP 3 715 252 A1**
(43) Date of publication of application: **30.09.2020**
(21) Application number: 19216328.5
(22) Date of filing: 13.12.2019
(51) Int. Cl.: B64D 11/04

(54) **CONNECTED GALLEY INSERTS**

(30) Priority: 29.03.2019 US 201916370438
(71) Applicant: B/E Aerospace, Inc., Winston- Salem, NC 27105 (US)
(72) Inventor: Abu-Saymeh, Mudar S., Olathe, KS 66062 (US); Schmalz, Brian C., Leawood, KS 66224 (US); Rogers, Bryan N., Kearney, MO 64060 (US)
(74) Representative: Dehns

(57) **Abstract**

A system (100) for connected aircraft galley inserts (102) is disclosed. In one or more embodiments, the system includes an on-board WiFi router (122) in an aircraft cabin. The system may further include one or more galley inserts (102) in the aircraft cabin communicatively coupled to the on-board WiFi router. In one or more embodiments, a galley insert of the one or more galley inserts includes a communication interface (110) and a controller (104) communicatively coupled to the one or more sensors and the communication interface. In embodiments, the controller is configured to collect data from one or more components of the galley insert, and transmit the collected data, via the communication interface, to the on-board WiFi router, wherein the on-board WiFi router is configured to receive the collected data from the one or more galley inserts and transmit the collected data to one or more ground devices.

## Description

### BACKGROUND

Current aircraft, including commercial aircraft, are typically configured with a galley for food and beverage preparation. A galley of an aircraft may include multiple galley inserts, including beverage brewing machines (e.g., coffee makers), ovens, chillers, beverage carts, trash compactors, and the like. In order to ensure proper galley insert operation for optimal passenger experience, performance data of galley inserts should be monitored. However, galley insert performance data is typically only transferred or monitored when the galley insert is malfunctioning and/or when the aircraft is on the ground, complicating aircraft maintenance and decreasing galley insert performance.

### SUMMARY

A system for connected aircraft galley inserts is disclosed. In one or more embodiments, the system includes an on-board WiFi router in an aircraft cabin. The system may further include one or more galley inserts in the aircraft cabin communicatively coupled to the on-board WiFi router. In one or more embodiments, a galley insert of the one or more galley inserts includes a communication interface and a controller communicatively coupled to the one or more sensors and the communication interface. In embodiments, the controller is configured to collect data from one or more components of the galley insert, and transmit the collected data, via the communication interface, to the on-board WiFi router, wherein the on-board WiFi router is configured to receive the collected data from the one or more galley inserts and transmit the collected data to one or more ground devices.

A system for connected aircraft galley inserts is disclosed, in accordance with additional embodiments of this disclosure. In one or more embodiments, the system includes one or more galley inserts in an aircraft cabin communicatively coupled to one or more ground devices. a galley insert of the one or more galley inserts may include a communication interface and a controller communicatively coupled to the communication interface. In embodiments, the controller is configured to collect data from one or more components of the galley insert, and transmit the collected data, via the communication interface, to a data communication network, wherein the data communication network is configured to receive the collected data from the one or more galley inserts and transmit the collected data to one or more ground devices.

A connected aircraft galley insert is disclosed. In one or more embodiments, the galley insert includes a communication interface. The galley insert further includes one or more components configured to collect data, and a controller communicatively coupled to the one or more components and the communication interface. In embodiments, the controller is configured to receive the collected data from the one or more components, and transmit the collected data, via the communication interface, to one or more ground devices via a wireless communication protocol.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are provided for example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a schematic illustration of an aircraft environment including a galley of an aircraft cabin, in accordance with one or more embodiments of the present disclosure;
FIG. 2 is a block diagram illustrating a galley insert, in accordance with one or more embodiments of the present disclosure;
FIG. 3 is a block diagram illustrating a system for connected galley inserts, in accordance with one or more embodiments of the present disclosure;
FIG. 4 is a block diagram illustrating a system for connected galley inserts, in accordance with one or more embodiments of the present disclosure; and
FIG. 5 is a block diagram illustrating a system for connected galley inserts, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Current aircraft, including commercial aircraft, are typically configured with a galley for food and beverage preparation. A galley of an aircraft may include multiple galley inserts, including beverage brewing machines (e.g., coffee makers), ovens, chillers, beverage carts, trash compactors, and the like. Monitoring galley insert performance is a key component in the operation of commercial airliners, as the availability and efficient performance of galley inserts is an important factor in aircraft passenger comfort and experience.

In order to increase the reliability and availability of galley inserts, performance data from the galley inserts should be monitored. However, galley insert performance data is typically only monitored on a periodic basis and/or when a galley insert is malfunctioning. Oftentimes, these galley insert performance monitoring procedures are only sufficient to address a problem after the issue has occurred, and are insufficient to prevent galley insert malfunctioning. Additionally, currently available systems and methods for monitoring galley insert performance data consume valuable space within the aircraft galley, and are unable to identify, address, and/or adjust galley insert operating characteristics (e.g., cooking profiles, brewing times, and the like) while an aircraft is in flight. With currently available systems, identifying and/or adjusting galley insert operating characteristics must be conducted while the aircraft is on the ground and/or by removing the galley insert for off-wing operations/maintenance, thereby complicating aircraft maintenance and impeding potential benefits resulting from galley insert adjustment.

Accordingly, embodiments of the present disclosure are directed at curing one or more of the shortfalls of previous approaches identified above. Broadly, embodiments of the present disclosure are directed to a system and method for aircraft galley insert connectivity. Additional embodiments of the present disclosure are directed to a system in which galley inserts are wirelessly coupled to one or more ground servers such that galley insert performance data may be monitored and/or adjusted while the aircraft is in flight. Further embodiments of the present disclosure are directed to a galley insert with a communication interface configured to wirelessly couple the galley insert to an on-board WiFi router, an on-board gateway device, an external communication node, or a ground server.

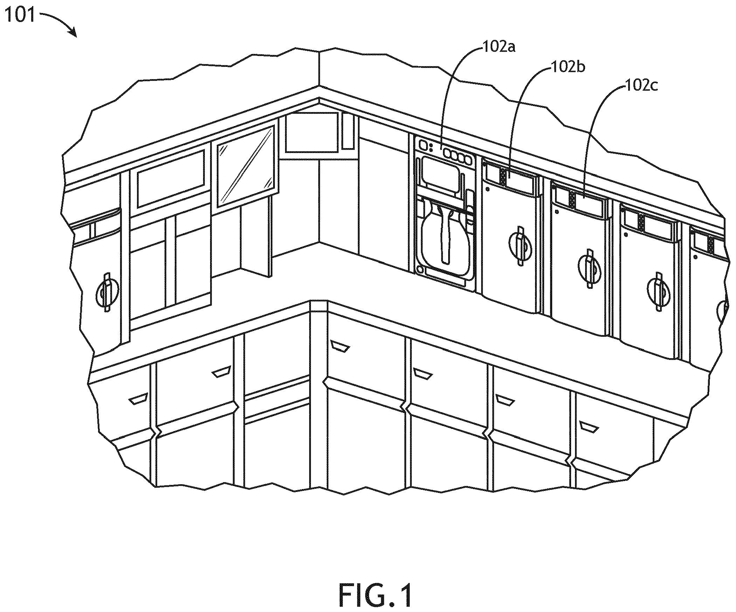

FIG. 1 illustrates an aircraft environment including a galley of an aircraft cabin 101, in accordance with an example embodiment of the present disclosure. As shown in FIG. 1, an aircraft cabin 101 may include an aircraft galley with one or more galley inserts 102. The one or more galley inserts 102a, 102b, 102c may include any galley insert known in the art including, but not limited to, beverage brewing machines (e.g., coffee maker galley insert 102a), ovens (e.g., oven galley insert 102b), chillers (e.g., chiller galley insert 102c), beverage carts, trash compactors, and the like.

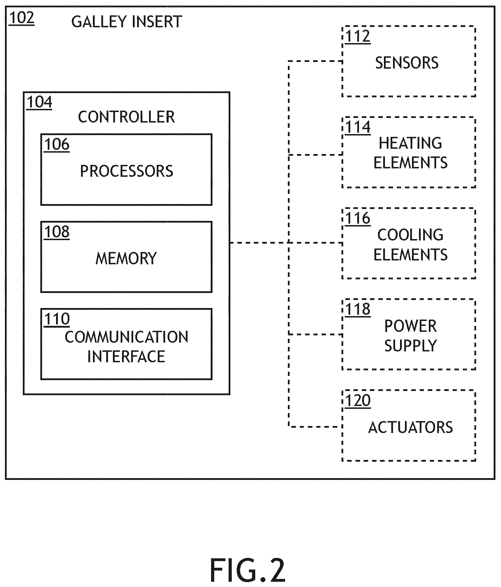

FIG. 2 illustrates a galley insert 102, in accordance with one or more embodiments of the present disclosure. As noted previously herein, galley insert 102 may include any galley insert known in the art including, but not limited to, a beverage brewing machine (e.g., coffee maker galley insert 102a), an oven (e.g., oven galley insert 102b), a chiller (e.g., chiller galley insert 102c), a beverage cart, a trash compactor, and the like. The galley insert 102 may include, but is not limited to, a controller 104 including one or more processors 106, a memory 108, and a communication interface 110. The galley insert 102 may further include one or more sensors 112, one or more heating elements 114, one or more cooling elements 116, a power supply 118, and one or more actuators 120.

In embodiments, the galley insert 102 includes a controller 104. The controller 104 may include, but is not limited to, one or more processors 106, a memory 108, and a communication interface 110. The one or more processors 106 provide processing functionality for the galley insert 102 and can include any number of processors, microcontrollers, circuitry, field programmable gate array (FPGA) or other processing systems, and resident or external memory for storing data, executable code, and other information accessed or generated by the galley insert 102. The or more processors 106 may be configured to execute one or more software programs or program instructions embodied in a non-transitory computer readable medium (e.g., memory 108) that implement techniques described herein. The controller 104 and/or or more processors 106 are not limited by the materials from which it is formed or the processing mechanisms employed therein and, as such, can be implemented via semiconductor(s) and/or transistors (e.g., using electronic integrated circuit (IC) components), or the like.

The memory 108 can be an example of tangible, computer-readable storage medium that provides storage functionality to store various data and/or program code associated with operation of the galley insert 102, such as software programs and/or code segments, or other data to instruct the or more processors 106 and/or other components of the galley insert 102 (e.g., one or more sensors 112, one or more heating elements 114, one or more cooling elements 116, a power supply 118, and one or more actuators 120, and the like) to perform the functionality described herein. Thus, the memory 108 can store data, such as a program of instructions for operating galley insert 102, including its components (e.g., controller 104, one or more processors 106, a memory 108, and a communication interface 110. The galley insert 102 may further include one or more sensors 112, one or more heating elements 114, one or more cooling elements 116, a power supply 118, and one or more actuators 120, etc.). It should be noted that while a single memory 108 is described, a wide variety of types and combinations of memory (e.g., tangible, non-transitory memory) can be employed. The memory 108 can be integral with the controller 104 and/or one or more processors 106, can comprise stand-alone memory, or can be a combination of both. Some examples of the memory 108 can include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, or the like.

The communication interface 110 can be operatively configured to communicate with components of the galley insert 102. For example, the communication interface 110 can be configured to retrieve data from the controller 104, one or more processors 106, memory 108, or other components of the galley insert 102 (e.g., one or more sensors 112, one or more heating elements 114, one or more cooling elements 116, a power supply 118, one or more actuators 120, and the like). In embodiments, the communication interface 110 is configured to transmit data for storage in the memory 108, retrieve data from storage in the memory 108, and so forth. The communication interface 110 can also be communicatively coupled with the controller 104 to facilitate data transfer between components of the galley insert 102. It should be noted that while the communication interface 110 is described as a component of the galley insert 102 and controller 104, one or more components of the communication interface 110 can be implemented as external components communicatively coupled to the galley insert 102 and/or controller 104 via a wired and/or wireless connection.

In embodiments, the communication interface 110 includes or is coupled to a transmitter, receiver, transceiver, physical connection interface, or any combination thereof. It is contemplated herein that the communication interface 110 may be configured to communicatively couple to various other components of system 100 in any manner known in the art. For example, the communication interface 110 may be configured to transmit and/or receive data using any wired or wireless communication protocol/technique known in the art including, but not limited to, copper wire, fiber optic cable, RF coupling, IR coupling, Wireless Personal Area Network (WPAN) protocols/Wireless Local Area Network (WLAN) protocols (e.g., WiFi, WiMax, Bluetooth, ZigBee, X-Bee, Z-Wave, M-Bus, and the like), medium range Wireless Neighborhood Area Network (WNAN) protocols (e.g., Wi-SUN, WM-Bus, and the like), or long-range wireless protocols (e.g., 3G, 4G, 4G LTE, 5G, and the like).

In some embodiments, the galley insert 102 may include various components communicatively coupled to the controller 104. In a general sense, the galley insert 102 the various components communicatively coupled to the controller 104 may include any component configured to carry out one or more of the functions of the respective galley insert 102. For example, as shown in FIG. 2, the galley insert 102 may include, but is not limited to, one or more sensors 112, one or more heating elements 114, one or more cooling elements 116, a power supply 118, and one or more actuators 120. The one or more sensors 112 may include any sensor known in the art including, but not limited to, temperature sensors, pressure sensors, humidity sensors, flow rate sensors, level sensors, and the like. In embodiments, the one or more sensors 112 are configured to generate, collect, and transmit data to the controller 104. For example, a temperature sensor of the one or more sensors 112 may be configured to collect temperature readings on a regular, semi-regular, or irregular basis, and transmit the collected temperature readings to the controller 104. The one or more processors 106 of the controller 104 may then be configured to receive the data/sensor readings from the one or more sensors 112 and store the received data in memory 108.

Similarly, the one or more heating elements 114 and the one or more cooling elements 116 may include any heating/cooling elements or systems known in the art including, but not limited to, resistive heaters, radiant heaters, compressors, evaporators, heat sinks, and the like. In embodiments, one or more heating elements 114 and the one or more cooling elements 116 are configured to generate, collect, and transmit data to the controller 104 regarding operational data of the one or more heating elements 114 and the one or more cooling elements 116. The one or more processors 106 of the controller 104 may then be configured to receive the data/readings from the one or more heating elements 114 and the one or more cooling elements 116 and store the received data in memory 108.

The power supply 118 may include any power supply module or power supply system known in the art. In this regard, the power supply 118 may include or may be configured to receive electrical power from a power source (e.g., electrical outlet, battery, or the like). The power supply 118 may be configured to distribute electrical power from a power supply to other components of the galley insert 102 (e.g., controller 104, memory 108, communication interface 110, one or more sensors 112, one or more heating elements 114, one or more cooling elements 116, a power supply 118, one or more actuators 120, any combination thereof, or the like).

In embodiments, the power supply 118 is configured to generate, collect, and transmit data to the controller 104 regarding operational data of the power supply 118. For example, operational data generated, collected, and transmitted by the power supply 118 may include, but is not limited to, galley insert 102 power consumption, power supply 118 power level (e.g., battery level), and the like. The one or more processors 106 of the controller 104 may then be configured to receive the data/readings from the power supply 118 and store the received data in memory 108.

The one or more actuators 120 communicatively coupled to the controller 104 may include any actuators known in the art configured to carry out one or more of the functions of the galley insert 102. For example, the one or more actuators may include a pump, a compressor, a mechanical arm, and the like. In embodiments, the one or more actuators 120 are configured to generate, collect, and transmit data to the controller 104 regarding operational data of the one or more actuators 120. The one or more processors 106 of the controller 104 may then be configured to receive the data/readings from the one or more actuators 120 and store the received data in memory 108.

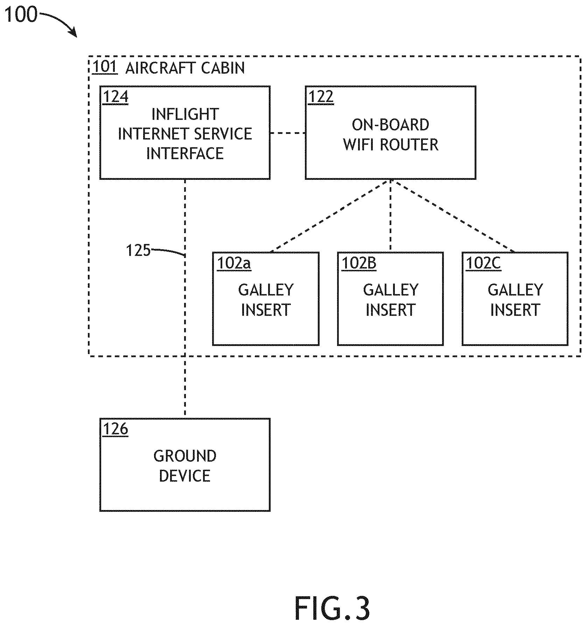

FIG. 3 illustrates a system 100 for connected galley inserts 102, in accordance with one or more embodiments of the present disclosure. The system 100 may include, but is not limited to, one or more galley inserts 102, an aircraft on-board WiFi router 122, an inflight internet service interface 124, and one or more ground devices 126.

The system 100 depicted in FIG. 3 may be configured to collect, store, and generate data associated with the one or more galley inserts 102 and transmit the collected data, via the on-board WiFi router 122, to one or more ground devices 126. It is contemplated herein that the ability to transmit galley insert 102 data to one or more ground devices 126 may provide for in-flight galley insert 126 data monitoring and/or fault detection. Furthermore, by enabling the transmission of data to and/or from the galley inserts 102, system 100 may facilitate timely, efficient, and cost-effective maintenance, updating, and repair of the one or more galley inserts 102.

In embodiments, one or more galley inserts 102a, 102b, 102c within an aircraft cabin 101 may be communicatively coupled to an on-board WiFi router 122. In this regard, the communication interface 110 of a galley insert 102 may be configured to communicatively couple to the on-board WiFi router 122 utilizing WiFi communication protocols, as described previously herein. In embodiments, the on-board WiFi router 122 may include an on-board WiFi router 122 which provides WiFi connectivity to passengers aboard the aircraft (e.g., passengers within aircraft cabin 101).

The one or more galley inserts 102a, 102b, 102c may be configured to transmit data stored in memory 108 to the on-board WiFi router 122. The one or more galley inserts 102a, 102b, 102c may be configured to transmit data to the on-board WiFi router 122 at any regular, semi-regular, or irregular interval known in the art. For example, in embodiments, the galley insert 102a may be configured to transmit data stored in memory 108 to the on-board WiFi router 122 every ten days. For example, in embodiments, the galley insert 102a may be configured to transmit data stored in memory 108 to the on-board WiFi router 122 only when data collected and stored in a memory 108 of a galley insert 102 indicates a galley insert 102 is malfunctioning or deteriorating in performance. Accordingly, it is contemplated herein that the galley inserts 102 may be configured to transmit data at regular intervals and/or specified times in order to provide regular status updates, malfunctioning alerts, maintenance alerts, maintenance reminders, and the like.

The data stored and transmitted by the one or more galley inserts 102 may include data collected by the one or more sensors 112, data collected by the heating elements 114 and cooling elements 116, data associated with the power supply 118, data associated with the one or more actuators 120, and the like. In this regard, the data transmitted by the one or more galley inserts 102 may include any data associated with the one or more galley inserts 102 including, but not limited to, galley insert 102 status, performance, usage, health, and the like.

The on-board WiFi router 122 may be communicatively coupled to the inflight internet service interface 124. It is contemplated herein that the on-board WiFi router 122 and the inflight internet service interface 124 may be communicatively coupled using any wired or wireless communication techniques known in the art. Additionally, while the on-board WiFi router 122 and the inflight internet service interface 124 are shown and described as separate components/housings within the aircraft cabin 101, this is not to be regarded as a limitation of the present disclosure, unless noted otherwise herein. In this regard, in additional and/or alternative embodiments, the on-board WiFi router 122 and the inflight internet service interface 124 may include a single device such that the on-board WiFi router 122 and the inflight internet service interface 124 are contained within a single housing.

In embodiments, the on-board WiFi router 122 is configured to receive data from the one or more galley inserts 102 and transmit the received data to the inflight internet service interface 124. In further embodiments, the inflight internet service interface 124 is configured to transmit received data (e.g., data received from the galley inserts 102a, 102b, 102c) to one or more ground devices 126 via a communicative coupling 125. In embodiments, the one or more ground devices 126 may include any ground devices known in the art including, but not limited to, servers, air traffic controllers, controllers of an airport/airline maintenance center, airliner facility controllers, and the like. For example, the one or more ground devices 126 may include a server located at an airliner maintenance center within an airport.

It is contemplated herein that the inflight internet service interface 124 may be configured to transmit data to the one or more ground devices 126 using any communicative coupling 125 known in the art. For example, in embodiments, the inflight internet service interface 124 may include an interface for a ground-based internet service provider, in which case the communicative coupling 125 includes a network of one or more terrestrial communication towers/nodes. For example, in additional/alternative embodiments, the inflight internet service interface 124 may include an interface for a satellite-based internet service provider, in which case the communicative coupling 125 include includes a network of one or more terrestrial communication towers/nodes and/or one or more communication satellites. In this regard, it is contemplated herein that the inflight internet service interface 124 may include an internet interface provided by a third party service provider and/or the airliner of the aircraft.

The inflight internet service interface 124 may be configured to transmit data to the one or more ground devices 126, via the communicative coupling 125, at any regular, semi-regular, or irregular interval known in the art. For example, in some embodiments, the inflight internet service interface 124 may be configured to transmit data to the one or more ground devices 126 contemporaneously, or substantially contemporaneously, as the inflight internet service interface 124 receives data. For example, in other embodiments, the inflight internet service interface 124 may be configured to transmit data to the one or more ground devices 126 at regular intervals.

In other embodiments, the inflight internet service interface 124 may be configured to transmit data to the one or more ground devices 126 dependent upon aircraft WiFi traffic and/or connectivity with the one or more ground devices 126. For instance, when WiFi traffic on the aircraft is high, the inflight internet service interface 124 may be configured to store in a memory (not shown) data received from the one or more galley inserts 102 until such point that the traffic alleviates and the stored data may be transmitted. In this regard, in some embodiments, the inflight internet service interface 124 may prioritize some traffic over others, such as prioritizing passenger WiFi traffic over galley insert 102 data traffic. In another embodiment, the inflight internet service interface 124 may be configured to store in a memory (not shown) data received from the one or more galley inserts 102 when the aircraft (e.g., aircraft cabin 101) is out of range or otherwise prevented from being communicatively coupled to the one or more ground devices 126. For example, the aircraft (aircraft cabin 101) may travel through a weather system which interferes with the communicative coupling 125 such that data may not be transmitted from the inflight internet service interface 124 to the one or more ground devices 126. In this example, the inflight internet service interface 124 may be configured to store in a memory (not shown) data received from the one or more galley inserts 102. Continuing with the same example, the inflight internet service interface 124 may be configured to transmit the data stored in the memory when the weather conditions improve, when the aircraft comes within range, or when the inflight internet service interface 124 is otherwise re-communicatively coupled with the one or more ground devices 126.

It is noted herein that data communications regarding aircraft and aircraft component performance typically must adhere to stringent communication protocol guidelines and regulations set by multiple agencies/organizations (e.g., Federal Aviation Administration). Adherence to strict communication protocols are used to ensure efficient data transmission, and to prevent interference with communications to and from surrounding aircraft. However, adherence to these stringent communication protocols may not be required, or even desirable, in the context of non-safety-critical transmissions, such as transmissions regarding aircraft galley inserts 102. In this regard, it is contemplated herein that data generated by galley inserts 102 may be collected and transmitted to devices off-aircraft (e.g., ground devices 126) without adhering to the stringent communication protocols required for most aircraft communications. For example, it is contemplated herein that the system 100 of the present disclosure may utilize communication techniques (e.g., on-board WiFi router 122, and the like) which prevent the need to adhere to strict communication protocol regulations/standards put forth by various governing bodies including, but not limited to, the Federal Aviation Administration (FAA), the European Aviation Safety Agency (EASA), additional/alternative flight certification organizations, the American National Standards Institute (ANSI), Aeronautical Radio, Incorporated (ARINC), the Radio Technical Commission for Aeronautics (RTCA), and/or additional/alternative aircraft guidelines organizations, and the like.

In some embodiments, as described previously herein, system 100 may include a one-way communication transmission system configured to transmit data from the aircraft (from the galley inserts 102) to one or more ground devices 126. In additional and/or alternative embodiments, system 100 may include a two-way communication transmission system configured to transmit data from the aircraft (from the galley inserts 102) to one or more ground devices 126, and from data from the one or more ground devices 126 to the aircraft (to the galley inserts 102). In this regard, the one or more ground devices 126 may include data recipients and/or data transmitters. In embodiments which include a two-way communication transmission system, it is contemplated that data communications transmitted to the aircraft/galley inserts 102 (e.g., transmissions from ground devices 126 to the aircraft) may be required to comply with the strict aviation communication protocols described previously herein.

In embodiments where system 100 includes a two-way communication transmission system, the one or more ground devices 126 may be configured to transmit data/signals to the one or more galley inserts 102 via the communicative coupling 125 and inflight internet service interface 124/on-board WiFi router 122, as described previously herein. Data/signals transmitted by the one or more ground devices 126 and received by the one or more galley inserts 102 may be stored in memory 108 or may be configured to adjust one or more characteristics of the one or more galley inserts 102.

An example may prove to be illustrative. Currently, aircraft galley inserts 102 such as ovens include programmable cooking instructions for various dishes. These programmable cooking profiles may be stored in memory 108 of the oven (galley insert 102), and may include a set of programmable cooking profiles to cook a rice dish, a set of programmable cooking instructions to cook a chicken dish, and the like. Updating stored programmable cooking instructions with current galley inserts 102 typically requires a scheduled maintenance/updating, or for a user to manually update the programmable cooking profiles at a user interface of the galley insert 102. Thus, with conventional galley inserts 102, updating programmable cooking profiles is a time-consuming process which requires advance notice, and may not be carried out on-the-fly.

Conversely, continuing with the same example, system 100 may allow for programmable cooking profiles to be updated on the one or more galley inserts 102 without the need for scheduled maintenance, or for manual updating. For example, a user may input one or more input commands via a ground device 126, wherein the one or more input commands include a set of new programmable cooking profiles to be implemented in the one or more galley inserts 102. The ground device 126 may then transmit one or more control signals, via communicative coupling 125, to the one or more galley inserts 102. The one or more galley inserts 102 may then be configured to receive the one or more control signals and store the received new programmable cooking profiles in memory 108. In this regard, system 100 may be used to update and/or adjust one or more operating parameters or characteristics of the one or more galley inserts 102 wirelessly while the aircraft is on the ground or in flight. Adjusting one or more characteristics of the galley inserts 102 may include, but is not limited to, storing programmable cooking profiles in memory 108, adjusting one or more characteristics of the one or more sensors 112, adjusting one or more characteristics of the one or more heating elements 114 or cooling elements 116, adjusting one or more characteristics of the power supply 118, adjusting one or more characteristics of the one or more actuators 120, and the like.

In embodiments, the one or more ground devices 102 may be configured to transmit one or more control signals to the one or more galley devices 102, wherein the one or more control signals are configured to update and/or adjust software or operating characteristics of the one or more galley inserts 102. For example, data transmitted from an oven galley insert 102b to the one or more ground devices 126 may indicate the oven galley insert 102b is not reaching proper cooking temperatures. In this example, a user may input one or more control commands to the ground device 126, wherein the ground device 126 is then configured to transmit one or more control signals to the oven galley insert 102b. Upon receiving the one or more control signals, the one or more processors 106 may be configured to cause the power supply 118 of the oven galley insert 102 to provide additional power to the one or more heating elements 114 in order to correct for the improper cooking temperatures.

By way of another example, the one or more ground devices 126 may be configured to transmit one or more control signals in order to request data from the one or more galley inserts 102. In this regard, the one or more galley inserts 102 may be configured to transmit data upon a request received by the one or more ground devices 126.

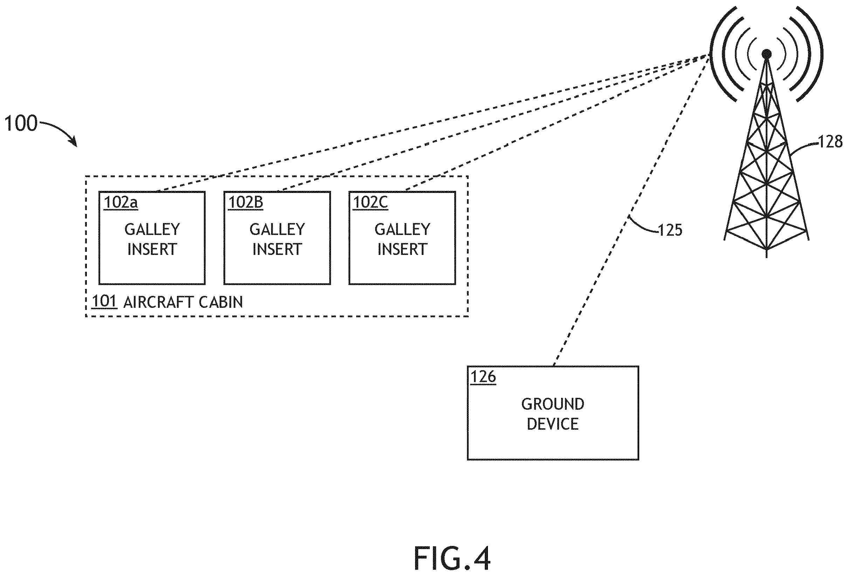

FIG. 4 illustrates a system 100 for connected galley inserts, in accordance with one or more embodiments of the present disclosure. It is noted herein that any description associated with system 100 depicted in FIG. 3 may be regarded as applying to system 100 depicted in FIG. 4, unless noted otherwise herein. Conversely, any description associated with system 100 depicted in FIG. 4 may be regarded as applying to system 100 depicted in FIG. 3, unless noted otherwise herein.

In some embodiments, the one or more galley inserts 102 may be configured to communicate directly with a data communication network 128. For example, as shown in FIG. 4, the one or more galley inserts 102 may be configured to transmit data directly to a data communication network 128, wherein the data communication network 128 is then configured to relay transmitted data to the one or more ground devices. The data communication network 128 may include any terrestrial or non-terrestrial data communication network known in the art. In this regard, the data communication network 128 may include, but is not limited to, one or more terrestrial cell towers, one or more satellites, and the like.

As noted previously herein, the one or more galley inserts 102 may be configured to transmit data to the data communication network 128 using any communication techniques or protocols known in the art including, but not limited to, RF coupling, IR coupling, Wireless Personal Area Network (WPAN) protocols/Wireless Local Area Network (WLAN) protocols (e.g., WiFi, WiMax, Bluetooth, ZigBee, X-Bee, Z-Wave, M-Bus, and the like), medium range Wireless Neighborhood Area Network (WNAN) protocols (e.g., Wi-SUN, WM-Bus, and the like), or long-range wireless protocols (e.g., 3G, 4G, 4G LTE, 5G, and the like).

In embodiments, the path with which data is transmitted from the one or more galley inserts 102 to the one or more ground devices 126 may be dependent upon a number of factors including, but not limited to, data traffic along various paths/devices, signal strength between devices, aircraft location (e.g., grounded, airborne), data transmission reliability, data transmission cost, and the like. For example, the one or more galley inserts 102 may have a stronger connection to the on-board WiFi router 122 while the aircraft is in the air, and a stronger connection to a data communication network 128 while the aircraft is on the ground. In this example, the one or more galley inserts 102 may be configured to transmit data to the one or more ground devices 126 via the on-board WiFi router 122/inflight internet service interface 124 (FIG. 3) when the aircraft is in the air, and may be further configured to transmit data to the one or more ground devices 126 via the data communication network 128 (FIG. 4) when the aircraft is on the ground.

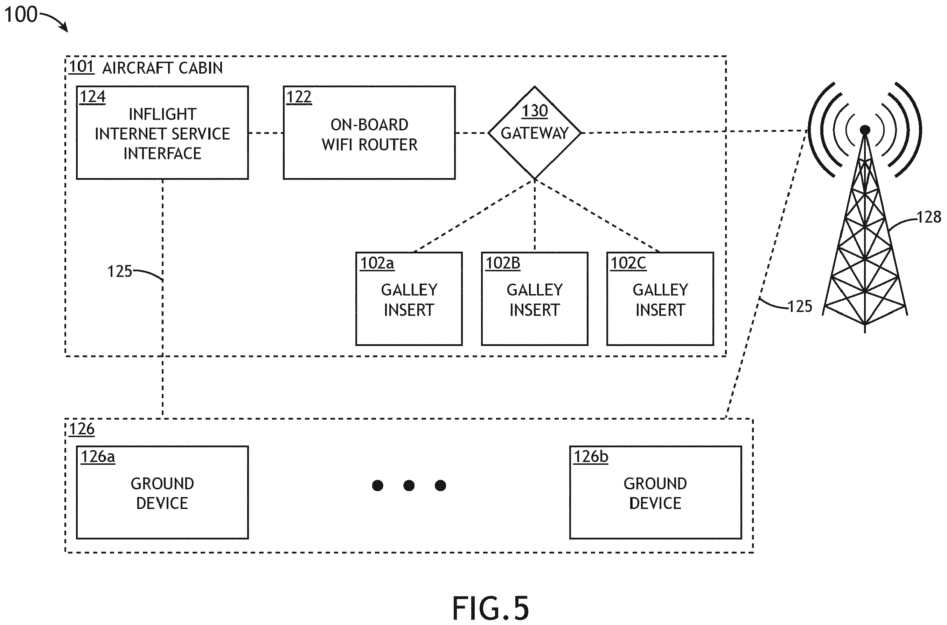

FIG. 5 illustrates a system for connected galley inserts, in accordance with one or more embodiments of the present disclosure. It is noted herein that any description associated with systems 100 depicted in FIGS. 3-4 may be regarded as applying to system 100 depicted in FIG. 5, unless noted otherwise herein. Conversely, any description associated with system 100 depicted in FIG. 5 may be regarded as applying to systems 100 depicted in FIGS. 3-4, unless noted otherwise herein.

In embodiments, system 100 includes an on-board gateway device 130. The gateway device 130 may be communicatively coupled to the one or more galley inserts 102 such that the gateway device 130 is configured to receive data from the one or more galley inserts 102 and relay received data along one or more data transmission pathways to the one or more ground devices 126. For example, as shown in FIG. 5, the one or more galley inserts 102 may be configured to transmit data to the gateway device 130. The gateway device 130 may be configured to relay the received data to the one or more ground devices 126a, 126b via the on-board WiFi router 122/inflight internet service interface 124 and/or the data communication network 128. As noted previously herein, the data transmission pathway used to transmit data from the one or more galley inserts 102 to the one or more ground devices 126 may be dependent upon a number of factors including, but not limited to, data traffic along various paths/devices, signal strength between devices, aircraft location (e.g., grounded, airborne), data transmission reliability, data transmission cost, and the like.

The gateway device 130 may include any gateway device configured to receive and transmit data known in the art. In some embodiments, the gateway device 130 includes a mobile device. For example, the gateway device 130 may include a smart phone, a smart watch, a tablet, a laptop, or the like. In additional embodiments, the gateway device 130 includes a stationary device. For example, the gateway device 130 may include a dedicated galley insert or a hub/transceiver configured to transmit data via WiFi protocols or any other communication protocol. For instance, in other embodiments, the gateway device 130 may include a transceiving device (e.g., wireless hub, tablet, smart phone, or the like) mounted within one of the galley inserts 102 and/or anywhere else in the galley (aircraft cabin 101) of an aircraft, wherein the mounted transceiving device is configured to receive collected data from the one or more galley inserts 102 and transmit the received data to the on-board WiFi router 122 and/or the data communication network 128.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system (100) for connected aircraft galley inserts (102), comprising:
an on-board WiFi router (122) in an aircraft cabin; and
one or more galley inserts (102) in the aircraft cabin communicatively coupled to the on-board WiFi router, a galley insert of the one or more galley inserts including:
a communication interface (110); and
a controller (104) communicatively coupled to the communication interface, the controller configured to:
collect data from one or more components of the galley insert; and
transmit the collected data, via the communication interface, to the on-board WiFi router, wherein the on-board WiFi router is configured to receive the collected data from the one or more galley inserts and transmit the collected data to one or more ground devices.

2. The system of claim 1, wherein the one or more components of the galley insert comprise at least one of a sensor (112), a heating element (114), a cooling element (116), a power supply (118), or an actuator (120).

3. The system of claim 1 or 2, further comprising a gateway device (130) in the aircraft cabin.

4. The system of claim 3, wherein transmitting the collected data, via the communication interface, to the on-board WiFi router comprises:
transmitting the collected data to the gateway device, wherein the gateway device is configured to receive the collected data and transmit the collected data to the on-board WiFi router; and/or wherein the gateway device comprises at least one of a mobile device or a stationary device.

5. The system of claim 3 or 4, further comprising a data communication network, wherein the gateway device is further configured to transmit the collected data to a data communication network, wherein the data communication network is configured to transmit the collected data to the one or more ground devices; optionally wherein the gateway device is configured to transmit the collected data to the data communication network via at least one of 3G, 4G, 4G LTE, or 5G communication protocols.

6. The system of any preceding, wherein the on-board WiFi router is configured to transmit the collected data to the one or more ground devices via an inflight internet service interface (124).

7. The system of claim 6, wherein the inflight internet service interface is configured to transmit collected data to the one or more ground devices via a communicative coupling, the communicative coupling including at least one of a network of one or more terrestrial communication nodes or a network of one or more communication satellites.

8. The system of claim 6 or 7, wherein the on-board WiFi router is configured to receive one or more signals from the one or more ground devices, wherein the on-board WiFi router is further configured to transmit the one or more signals to at least one galley insert of the one or more galley inserts, the one or more signals configured to adjust one or more characteristics of the at least one galley insert; optionally wherein adjusting one or more characteristics of the at least one galley insert includes storing one or more programmable cooking profiles in a memory of the at least one galley insert.

9. A system (100) for connected aircraft galley inserts, comprising:
one or more galley inserts (102) in an aircraft cabin communicatively coupled to one or more ground devices (126), a galley insert of the one or more galley inserts including:
a communication interface (110); and
a controller (104) communicatively coupled to the communication interface, the controller configured to:
collect data from one or more components of the galley insert; and
transmit the collected data, via the communication interface, to a data communication network (128), wherein the data communication network is configured to receive the collected data from the one or more galley inserts and transmit the collected data to one or more ground devices (126).

10. The system of claim 9, wherein transmitting the collected data, via the communication interface, to the data communication network comprises transmitting the collected data via at least one of 3G, 4G, 4G LTE, or 5G communication protocols.

11. The system of claim 9 or 10, wherein the one or more components of the galley insert comprise at least one of a sensor (112), a heating element (114), a cooling element (116), a power supply (118), or an actuator (120).

12. The system of claim 9, 10 or 11, further comprising a gateway device (130) in the aircraft cabin; optionally wherein transmitting the collected data, via the communication interface, to the data communication network comprises:
transmitting the collected data to the gateway device, wherein the gateway device is configured to receive the collected data and transmit the collected data to the data communication network.

13. The system of any of claims 9 to 12, wherein the data communication network includes at least one of a network of one or more terrestrial communication nodes or a network of one or more communication satellites.

14. The system of any of Claims 9 to 13 wherein the data communication network is configured to receive one or more signals from the one or more ground devices, wherein the data communication network is further configured to transmit the one or more signals to at least one galley insert of the one or more galley inserts, the one or more signals configured to adjust one or more characteristics of the at least one galley insert; optionally wherein adjusting one or more characteristics of the at least one galley insert includes storing one or more programmable cooking profiles in a memory of the at least one galley insert.

15. A connected aircraft galley insert (102), comprising:
one or more components (112;114;116;118;120);
a communication interface (110); and
a controller (104) communicatively coupled to the one or more components and the communication interface, the controller configured to:
collect data from the one or more components; and
transmit the collected data, via the communication interface, to one or more ground devices via a wireless communication protocol.
